# DEMANDE DE BREVET EUROPEEN

(11) **EP 1 088 805 A2**
(43) Date de publication de la demande: **04.04.2001**
(21) Numéro de dépôt: 00870221.9
(22) Date de dépôt: 29.09.2000
(51) Int. Cl.: C05F 9/00, B03B 9/04, C10L 5/46

(54) **Procédé de traitement et de valorisation de déchets**

(30) Priorité: 01.10.1999 BE 9900654; 17.11.1999 BE 9900746
(71) Demandeur: Comptoir d'Escompte du Luxembourg S.A., 6700 Arlon (BE)
(72) Inventeur: Danneau, Jean-Jacques, 6210 Frasnes-Lez-Gosselies (BE)
(74) Mandataire: Van Malderen, Michel

(57) **Abrégé**

La présente invention se rapporte à un procédé de traitement de déchets, caractérisé en ce que l'on soumet les déchets à un pré-broyage et à un tri magnétique et densitométrique permettant d'éliminer les fractions inertes et métalliques, en ce que l'on mélange la masse du résidu de ce traitement dans un broyeur-malaxeur à de la chaux vive et, le cas échéant, à un liant constitué par un ou plusieurs éléments liquides en vue d'obtenir un mélange homogène de granulométrie régulière, en ce que l'on soumet le mélange à maturation et, si nécessaire, à un traitement de désintégration, éventuellement combiné à un séchage, de manière à obtenir des particules désagrégées, en ce que l'on injecte ces particules dans un combusteur à lit fluidisé en même temps que de l'air porteur en veillant à maintenir lesdites particules en suspension dans la chambre de combustion par le flux d'air, au-dessus d'une flamme d'allumage en permettant la combustion intégrale du produit à haute température.

## Description

### Objet de l'invention

La présente invention concerne un procédé de traitement de déchets qui permet d'éliminer ceux-ci en fournissant de manière économique et efficace un sous-produit valorisable, en particulier sous forme d'engrais ou d'amendement agricole.

L'invention concerne des déchets de toute nature, en particulier des ordures ménagères et des déchets industriels ou agroalimentaires, du lisier, des boues de station d'épuration, du bois, des graisses et des huiles minérales et végétales.

L'invention concerne tout particulièrement le procédé de traitement de ce type de déchets tout en évitant l'émission de dioxines ou de fumées acides et en évitant la production de mâchefers.

### Arrière-plan technologique et état de la technique

Actuellement, le traitement des déchets, et en particulier le traitement des ordures ménagères, s'effectue essentiellement par trois techniques : l'enfouissement, le compostage et l'incinération.

L'enfouissement, outre tous les problèmes environnementaux qu'il pose, présente l'inconvénient du gaspillage de l'énergie récupérable dans les déchets. Le compostage ne permet qu'une valorisation de la fraction organique et ne garantit pas l'élimination ou l'inertage des métaux lourds. De ce fait, son épandage rencontre beaucoup de réserves de la part des agriculteurs et sa valeur agronomique reste peu intéressante. L'incinération rencontre actuellement une grande opposition de la population, en particulier à cause des rejets gazeux toxiques (dioxines et fumées acides). De plus, la technique produit une grande quantité de mâchefers inutilisables ainsi qu'une proportion importante d'imbrûlés. Le rendement énergétique reste très limité comparé à l'investissement qui est particulièrement élevé.

Le document US-5143481-A propose de traiter les boues d'épuration des égouts municipaux en produisant un produit stérile pouvant servir de fertilisant. Ce document prévoit que des résidus de combustion d'un lit fluidisé sont ajoutés à la boue. On obtient un mélange présentant une consistance similaire à de la terre, qui peut être facilement répandu.

Diverses techniques ont déjà été proposées pour le traitement de certains résidus. C'est ainsi que l'on a proposé l'utilisation d'un lit fluidisé pour des boues contenant des protéines, en particulier des boues provenant du traitement d'eaux usées.

Dans la publication DE-19522164-A, on propose notamment le traitement de boues contenant des protéines dans un lit fluidisé disposé dans un réservoir de séchage. Un gaz de séchage est admis dans un lit fluidisé tandis qu'une boue partiellement déshydratée sous forme de granules est admise dans le lit fluidisé. Cette technique se limite en fait à sécher la matière sans combustion.

De même, dans le document DE-3600400-A, on décrit un traitement de boues alcalines provenant de l'étape de carbonatation dans les sucreries, consistant à les sécher dans un lit fluidisé en vue de les utiliser soit comme fertilisant ou comme nourriture animales. Le but est d'éviter la dispersion de poussière, et cette technique n'implique pas une combustion.

L'utilisation de chaux vive pour le traitement de déchets domestiques, de boues et de graisses consistant à les mélanger avec une quantité importante de chaux vive dans un réservoir de mélange en utilisant une vis sans fin pour atteindre une température de l'ordre de 250 à 300 °C en provoquant le séchage du produit est décrite dans le document FR-2762313.

Une technique similaire est décrite dans le document GB-2300185-A.

Le document WO 97/01513 propose de traiter des boues de stations d'épuration en y ajoutant des additifs solides (tourbe), en traitant la masse solide formée par extrusion en éliminant de l'eau. Pour protéger le produit résultant de l'action des bactéries, il est traité par de la chaux.

Le document DE-4445702-A décrit une technique pour brûler des boues aqueuses de stations d'épuration en y ajoutant des matières cellulosiques.

Le document WO 95/35354 décrit le traitement de déchets comportant le traitement par de la chaux vive et un traitement thermique en vue d'obtenir une matière combustible.

Le document DE-3644403-A décrit un traitement à sec des gaz résiduaires chargés en matières solides par des criblages successifs.

### Buts visés par la présente invention

La présente invention vise à éviter les inconvénients des techniques connues, en particulier à obtenir une valorisation quasi intégrale des déchets, et en particulier des ordures ménagères, à obtenir un produit intermédiaire stable et hygiénisé, à bloquer les métaux lourds, et à réaliser une réduction de volume importante.

De plus, on vise à obtenir une valorisation thermique avantageuse tout en obtenant un sous-produit de valeur agronomique intéressante.

Bien entendu, l'absence de rejet de dioxines et de production de mâchefers et d'imbrûlés constitue une condition que l'invention se propose de réaliser conjointement avec une facilité de stockage du produit fini.

A titre complémentaire, l'invention vise à proposer un procédé recourant à un investissement relativement modéré et modulable tout en étant peu consommateur d'énergie, afin de satisfaire les critères économiques.

### Description des éléments caractéristiques de l'invention

L'invention porte essentiellement sur un procédé de traitement de déchets, caractérisé en ce que l'on soumet les déchets à un pré-broyage et à un tri magnétique et densitométrique permettant d'éliminer les fractions inertes et métalliques, en ce que l'on mélange la masse du résidu de ce traitement dans un broyeur-malaxeur à de la chaux vive et, le cas échéant, à un liant constitué par un ou plusieurs éléments liquides en vue d'obtenir un mélange homogène de granulométrie régulière, en ce que l'on soumet le mélange à maturation et, si nécessaire, à un traitement de désintégration, éventuellement combiné à un séchage, de manière à obtenir des particules désagrégées, en ce que l'on injecte ces particules dans un combusteur à lit fluidisé en même temps que de l'air porteur en veillant à maintenir lesdites particules en suspension dans la chambre de combustion par le flux d'air, au-dessus d'une flamme d'allumage en permettant la combustion intégrale du produit à haute température.

Aucun des documents décrits dans l'état de la technique ne décrit ou ne suggère d'utiliser pour l'alimentation du combusteur à lit fluidisé d'un produit constitué de particules désagrégées (généralement qualifié de fluff) ayant préalablement été traité par broyage-malaxage à l'aide de chaux vive.

De manière surprenante, ce traitement semble indispensable pour obtenir un fluff facile à manipuler et en particulier qui ne cause pas de difficulté pour la combustion en lit fluidisé en facilitant le réglage de la combustion.

La chaux contenue dans le produit solide de la combustion rend celui-ci facilement valorisable en agriculture.

Il convient de noter que les déchets ne doivent pas être complétés par des additions d'autres matières (cellulosiques, etc. ) en vue d'accroître leur pouvoir calorifique, bien que le recours à un telle opération n'est pas exclue de la technique préconisée.

L'origine des déchets mis en oeuvre, pour autant qu'ils présentent un pouvoir calorifique suffisant, est très large. De préférence, lesdits déchets sont constitués à partir d'ordures ménagères, de déchets industriels et agroalimentaires, lisier, boues d'épuration, bois, graisses et huiles minérales et végétales.

Dans la technique utilisée, le liant est constitué par des huiles, des graisses, du lisier et des boues.

Le transport des particules vers le combusteur à lit fluidisé s'effectue de préférence à l'aide de convoyeurs à vis, solution simple et élégante compte tenu du caractère désagrégé des particules mises en oeuvre.

La température de combustion dans le lit fluidisé est contrôlée automatiquement en temps réel et est régulée par l'injection additionnelle de produits à haut PCI.

De préférence, les cendres sont récupérées par des décendreurs automatiques en les divisant en fraction lourde, en fraction moyenne et en fraction fine. Dans ce cas, la séparation en fractions lourde, moyenne et fine s'effectue respectivement dans une première chambre, dans une chambre intermédiaire et dans un séparateur multicyclonique.

Selon l'invention, il est apparu intéressant de soumettre les gaz imbrûlés à une postcombustion.

De manière générale, l'énergie libérée est utilisée pour la production de vapeur, de préférence par échange thermique à haute température.

Afin d'éviter toute pollution, les gaz, après dépoussiérage, seront utilement lavés dans une tour humide, un échangeur gaz-eau et un filtre à charbon actif.

D'autres caractéristiques et avantages de l'invention apparaîtront à la lecture de la description détaillée qui suit en regard des dessins annexés.

### Brève description des dessins

La figure 1 représente un diagramme fonctionnel du principe de fonctionnement du procédé comportant une phase 1 constituant une phase de traitement préalable, c'est-à-dire une préparation des déchets, un prébroyage et un broyage-malaxage avec de la chaux vive, et une phase 2 comportant essentiellement une combustion sur lit fluidisé.

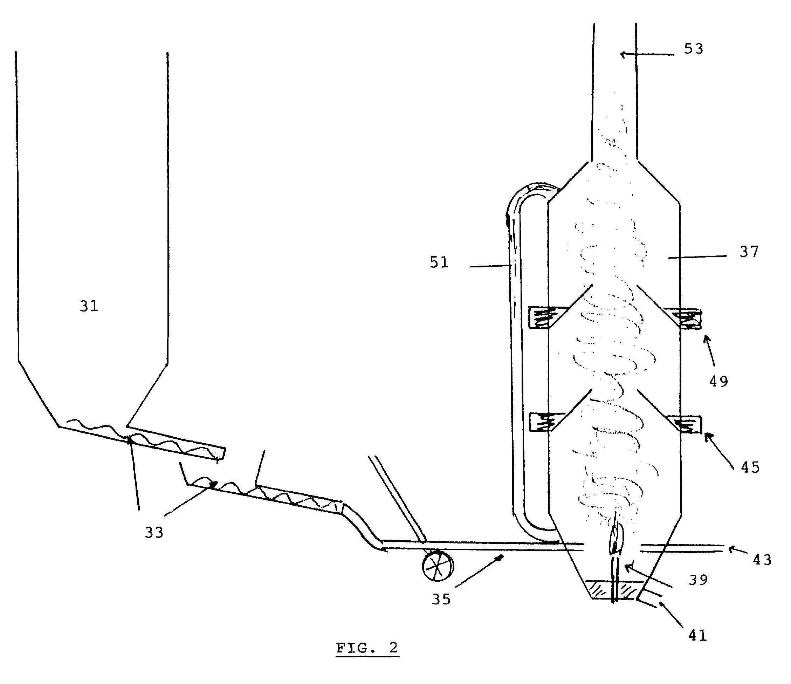

La figure 2 illustre schématiquement la phase 2 précitée.

La figure 3 représente une vue schématique en coupe du cyclone, illustrant la disposition des injecteurs.

### Description détaillée de l'invention

Le procédé qui fait l'objet de la revendication 1 peut être considéré comme réalisé en deux phases, à savoir une première phase de traitement préalable suivie d'une seconde phase comportant essentiellement une combustion sur lit fluidisé.

Entre les deux phases de traitement, le produit intermédiaire obtenu peut être stocké si nécessaire et ceci même pendant des durées importantes du fait de sa bonne stabilité et qu'il est pratiquement inodore.

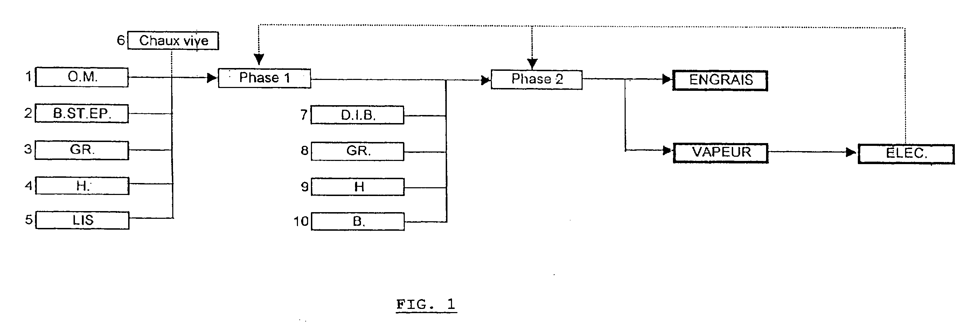

Dans le diagramme de la figure 1, on a représenté par les repères 1 à 5 différentes sources de déchets, successivement des ordures ménagères, des boues de station d'épuration, des graisses, des huiles et du lisier. Un approvisionnement de chaux vive 6 est prévu pour également alimenter la phase 1 du procédé.

De manière classique, dans la première phase, les ordures ménagères sont soumises à un broyage sommaire de manière à ouvrir les sacs de collecte. Elles sont ensuite étalées sur une large bande de manière à permettre la récupération des piles électriques et autres éléments métalliques par un système magnétique et courant de Foucault. Un contrôle visuel permet l'élimination des objets inertes, tels que du verre, les plus importants.

Ces techniques sont absolument classiques et habituelles et elles ne requièrent donc pas d'explication complémentaire.

Les ordures prébroyées sont ensuite acheminées, de préférence par lots successifs, dans un broyeur-malaxeur du type dit "à couteaux", dans lequel elles sont intimement mélangées à de la chaux vive et de préférence à un liant. Généralement, des proportions de l'ordre de 15% en chaux vive et de l'ordre de 15% en poids de liant sont recommandées.

Le liant peut être constitué selon les besoins ou les opportunités par des graisses, des huiles et/ou des boues de station d'épuration, ou encore par du lisier. L'opération nécessite une durée de l'ordre de 20 à 35 minutes suivant le type de malaxeur utilisé.

Le mélange s'effectue en principe par lots successifs de manière à pouvoir doser avec précision la chaux et le liant utilisés et de façon à pouvoir travailler en milieu fermé pendant l'opération de mélange.

Après broyage et malaxage, le produit est mis en tas pendant une durée de l'ordre de 4 à 6 heures, au cours de laquelle la maturation résultant de la réaction exothermique de la chaux vive se déroule. Le produit qui en résulte est un produit hygiénisé, chimiquement stable, hygrophobe et de granulométrie grossière mais régulière (95% inférieure à 3 mm). Le cas échéant, un affinage ou désintégration permet d'éliminer les éléments de trop grosse taille.

Les métaux lourds résiduels éventuellement présents sont par cette opération bloqués dans une structure ionique stable, totalement insoluble en phase aqueuse. Ils sont insensibles à la percolation et ne risquent donc pas de subir de lixiviation. On observe que pratiquement, les métaux lourds ainsi bloqués ne peuvent être libérés que dans des conditions drastiques, à savoir un pH inférieur à 3 et une température supérieure à 1300 °C.

Le PCI du produit est situé entre 1800 et 4500 Kcal suivant les liants utilisés. Le produit obtenu peut être stocké ou peut être immédiatement utilisé dans la phase suivante.

Avant ce stockage ou le traitement suivant, on peut éventuellement procéder à un séchage complémentaire.

Le produit provenant (éventuellement après un stockage intermédiaire) de la phase 1 parvient ensuite à la phase 2. Dans la figure 1, on a représenté des moyens de stockage 7 à 10 pour respectivement des déchets industriels banals (préalablement broyés), des graisses, des huiles et des boues.

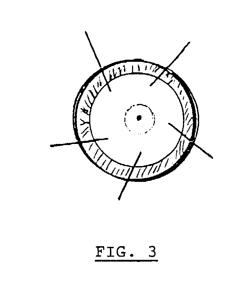

Dans cette seconde phase, le produit intermédiaire provenant d'une trémie de stockage 31 est acheminé, par exemple par une vis sans fin 33. On utilise de préférence, comme représenté, une vis sans fin à deux étages à titre de sécurité anti-retour de feu. La matière est déplacée avec injection d'air 35, vers un combusteur à lit fluidisé 37, l'air de transport servant à la fluidisation. Ce combusteur 37 est constitué d'un cyclone dans lequel les produits sont injectés au-dessus d'une flamme d'allumage 39 alimentée au gaz ou au fuel. On utilise de préférence des injecteurs multiples disposés sur la périphérie du cyclone (voir figure 3), dont l'angle d'injection est choisi pour provoquer un mouvement rotatif des gaz dans l'appareil et dont le flux maintient les particules en suspension.

La fraction lourde non combustible (morceaux de verre, inertes et métaux résiduels) retombe le long des parois et est récoltée dans le bas de l'appareil sous la flamme et elle est évacuée en 41.

Un contrôle automatique de température de combustion gère en temps réel l'ouverture d'injecteurs additionnels 43 fournissant des produits à haute valeur énergétique tels que des graisses, des huiles, des plastiques broyés, du bois, etc., prélevés des zones de stockage 7 à 10 (voir figure 1) de manière à conserver en permanence la température voulue.

Les conditions de la combustion résultant du milieu basique de départ (pH supérieur à 10, durée de combustion supérieure à 4 secondes et température de consigne de l'ordre de 900 à 1200 °C) sont suffisante pour empêcher la production de dioxines et d'acide chlorhydrique.

Les cendres résiduelles (généralement de l'ordre de 30 à 40% en poids selon l'origine des déchets) récupérées en 45, 47 contiennent, outre de la chaux, un grand nombre des éléments requis en agriculture (N, P, K, Mg) mais les teneurs en métaux lourds lixiviables et en PCB sont inférieures aux normes autorisées. Les produits de ce type ne sont donc présents ni dans les effluents gazeux, ni dans les cendres.

Le produit final est totalement exempt de germes ou de contamination.

Ces cendres constituent un produit fini ou un produit semi-fini suivant qu'elles sont utilisées en épandage agricole direct ou qu'elles servent de base à la fabrication d'engrais composés plus complexes. Dans ce dernier cas, après ajustement par mélange des éléments minéraux supplémentaires et analyse, le produit peut être commercialisé sous les diverses formes requises par l'agriculture, généralement soit sous forme pulvérulente, soit sous forme granulée.

L'air injecté en 35 est de l'air préchauffé capté par une hotte aspirante placée au-dessus du tas mis en maturation après malaxage (voir phase 1) de manière à utiliser les calories libérées en maturation et brûler les gaz produits par la réaction de la chaux.

Une partie des gaz peut être captée à la partie supérieure du combusteur 37 et est récupérée et acheminée par le conduit 51 pour régulariser la température de combustion.

Par une cheminée 53 se produit l'évacuation des gaz brûlés. A ce niveau peut être prévu un laveur et un échangeur thermique pour la valorisation des calories produites.

## Revendications

1. Procédé de traitement de déchets, caractérisé en ce que l'on soumet les déchets à un pré-broyage et à un tri magnétique et densitométrique permettant d'éliminer les fractions inertes et métalliques, en ce que l'on mélange la masse du résidu de ce traitement dans un broyeur-malaxeur à de la chaux vive et, le cas échéant, à un liant constitué par un ou plusieurs éléments liquides en vue d'obtenir un mélange homogène de granulométrie régulière, en ce que l'on soumet le mélange à maturation et, si nécessaire, à un traitement de désintégration, éventuellement combiné à un séchage, de manière à obtenir des particules désagrégées, en ce que l'on injecte ces particules dans un combusteur à lit fluidisé en même temps que de l'air porteur en veillant à maintenir lesdites particules en suspension dans la chambre de combustion par le flux d'air, au-dessus d'une flamme d'allumage en permettant la combustion intégrale du produit à haute température.

2. Procédé selon la revendication 1, caractérisé en ce que lesdits déchets sont constitués à partir d'ordures ménagères, de déchets industriels et agroalimentaires, lisier, boues d'épuration, bois, graisses et huiles minérales et végétales.

3. Procédé selon la revendication 1 ou 2, caractérisé en ce que le liant est constitué par des huiles, des graisses, du lisier et des boues.

4. Procédé selon l'une quelconque des revendications précédentes, caractérisé en ce que le transport des particules vers le combusteur à lit fluidisé s'effectue à l'aide de convoyeurs à vis.

5. Procédé selon l'une quelconque des revendications précédentes, caractérisé en ce que la température de combustion dans le lit fluidisé est contrôlée automatiquement en temps réel et est régulée par l'injection additionnelle de produits à haut PCI.

6. Procédé selon l'une quelconque des revendications précédentes, caractérisé en ce que les cendres sont récupérées par des décendreurs automatiques en les divisant en fraction lourde, en fraction moyenne et en fraction fine.

7. Procédé selon la revendication 6, caractérisé en ce que la séparation en fractions lourde, moyenne et fine s'effectue respectivement dans une première chambre, dans une chambre intermédiaire et dans un séparateur multicyclonique.

8. Procédé selon l'une quelconque des revendications précédentes, caractérisé en ce que les gaz imbrûlés subissent une postcombustion.

9. Procédé selon l'une quelconque des revendications précédentes, caractérisé en ce que l'énergie libérée est utilisée pour la production de vapeur par échange thermique à haute température.

10. Procédé selon l'une quelconque des revendications précédentes, caractérisé en ce que les gaz, après dépoussiérage, sont lavés dans une tour humide, un échangeur gaz-eau et un filtre à charbon actif.

11. Produit solide résultant du procédé selon l'une quelconque des revendications précédentes, caractérisé en ce qu'il est exempt de dioxines et d'autres polluants lixiviables, en particulier de métaux lourds non bloqués.

12. Utilisation du produit selon la revendication 11 comme engrais ou amendement agricole.
